(19) Europäisches Patentamt / European Patent Office / Office européen des brevets

(11) **EP 1 630 216 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **04726416.3**

(22) Anmeldetag: **08.04.2004**

(51) Int Cl.:
*C09K 5/04* (2006.01)

(86) Internationale Anmeldenummer:
**PCT/CN2004/000319**

(87) Internationale Veröffentlichungsnummer:
**WO 2004/099336 (18.11.2004 Gazette 2004/47)**

(54) **UMWELTFREUNDLICHER KÜHLMITTELERSATZ FÜR HCFC-22**

ENVIRONMENTAL REFRIGERANT INSTEAD OF HCFC-22

FLUIDE FRIGORIGENE ENVIRONNEMENTAL REMPLACANT HCFC-22

(84) Benannte Vertragsstaaten:
**AT BE BG CH CY CZ DE DK EE ES FI FR GB GR HU IE IT LI LU MC NL PL PT RO SE SI SK TR**

(30) Priorität: **07.05.2003 CN 03116856**

(43) Veröffentlichungstag der Anmeldung:
**01.03.2006 Patentblatt 2006/09**

(73) Patentinhaber: **ZheJiang Lantian Environmental Protection Hi-Tech Co. Ltd.
Hangzhou Zhejiang 310012 (CN)**

(72) Erfinder:
• **CHEN, Guangming 22nd Floor
Deyuan Building
Hangzhou
Zhejiang 310012 (CN)**
• **GUO, Zhikai
2nd Floor
Deyuan Building
Hangzhou
Zhejiang 310012 (CN)**
• **GUO, Xinzheng
2nd Floor
Deyuan Building
Hangzhou
Zhejiang 310012 (CN)**
• **XUAN, Yongmei
2nd Floor
Deyuan Building
Hangzhou
Zhejiang 310012 (CN)**

(74) Vertreter: **Brown, David Leslie
Haseltine Lake LLP
Redcliff Quay
120 Redcliff Street
Bristol BS1 6HU (GB)**

(56) Entgegenhaltungen:
**EP-A2- 0 626 435    CN-A- 1 063 301
CN-A- 1 136 065    CN-A- 1 280 165
GB-A- 2 298 866    JP-A- 5 017 755
JP-A- 8 157 810    US-A- 5 277 834
US-A- 5 722 256**

EP 1 630 216 B1

**Beschreibung**

Diese Erfindung betrifft generell ein Kältemittel und insbesondere ein umweltfreundliches Kältemittel, das als alternative Flüssigkeit anstelle des HCFC-22 verwendet werden kann.

Unter den Hydrogencholrofluorocarbon-Kältemitteln wird das HCFC-22 in Kühl- und Luftklimaanlagen wegen der hervorragenden Eigenschaften auf dem thermodynamischen, chemischen und physikalischen Gebiet weit verbreitet verwendet.

Aber das HCFC-22 besitzt ein Verarmungspotential für die Ozonschicht in der Stratosphäre. Seine ODP (Ozone Depletion Potential; Ozonverarmungspotential, das CFC-11 als Referenz 1,0 verwendet) beträgt 0,055. Gemäss dem Montreal Protokoll und dessen Ergänzungen sollte das HCFC-22 vor dem Jahr 2020 in den Industrieländern und vor dem Jahr 2030 in den Entwicklungsländern nicht mehr verwendet werden.

Ferner ist das HCFC-22 mit einem anderen Umgebungsproblem verbunden. Sein GWP (Global Warming Potential, Globales Erwärmungspotential, das $CO_2$ als Referenz 1,0 verwendet, 100 Jahre) beträgt 1700, und dieses Gas ist eines der Treibhausgase, die unter der Kontrolle des Kyoto-Protokolls stehen. Es ist daher wichtig, nach alternativen Kältemitteln als Ersatz für das HCFC-22 zu forschen.

Die gegenwärtigen Untersuchungen haben gezeigt, dass keine reine Substanz in Bezug auf das COP und die Volumenkühlkapazität an das HCFC-22 herankommen kann oder besser als dieses ist. Mischungen von Hydrofluorokarbonen werden gewöhnlich als alternative Kältemittel verwendet. WO 92/11338 offenbart konstant siedenden Mischungen aus Pentafluorethan und Difluormethan. US 5,277,834 offenbart nahezu azeotrope Massen, die eine Mischung von Pentafluorethan und 1,1,1-Trifluorethan mit einem oder mehreren von Chlordifluormethan, 1,2,2,2-Tetrafluorethan, 1,1,2,2-Tetrafluorethan, 1-Chlor-1,1,2,2-Tetrafluorethan, 1-Chlor-1,2,2,2-tetrafluorethan, 1,1,1,2,3,3,3-Heptafluorpropan, 1,1,1,2,2,3,3-Heptafluorpropan und Perfluorcyclopropan; Chlordifluormethan und Pentafluorethan mit einem oder mehreren von Ethan, Butan, Isobutan, Dimethylether, Propylen und Difluormethan; Chlordifluormethan mit 1,1,1-Trifluorethan und 1,2,2,2-Tetrafluorethan, Propan und Pentafluorethan, oder 1,1,1-Trifluorethan und Octafluorpropan; und Pentafluorethan mit Fluorethan und 1,2,2,2-Tetrafluorethan darstellt. EP 0 626 435 offenbart eine Mischung aus drei Verbindungen ausgewählt aus der Gruppe bestehend aus Fluorkohlenwasserstoffen dargestellt durch die Verbindung $C_lH_mF_n$ (1), worin wenn l 1 ist, ist m eine Ganzzahl zwischen 1 und 2, ist n eine Ganzzahl zwischen 2 und 3 und m + n = 4; wenn l 2 ist, ist m eine Ganzzahl zwischen 1 und 4, ist n eine Ganzzahl zwischen 2 und 5 und m + m = 6; und wenn l 3 ist, ist m eine Ganzzahl zwischen 1 und 3, ist n eine Ganzzahl zwischen 5 und 7 und m + n = 8. US 5,722,256 offenbart dreifache Mischungen aus Pentafluorethan, Difluormethan und Tetrafluorethan.

R407C und R410A sind zwei hauptsächlich empfohlene, alternative Kältemittel. R407C ist eine ternäre Mischung aus HFC-32, HFC-125 und HFC-134a. Sein Verdampfungsdruck und Kondensierungsdruck sind mit denen des HCFC-22 vergleichbar und bilden die Hauptvorteile beim Ersatz. R407C gehört zu den nichtazeotropen Mischungen. Sein Temperaturbereichsfaktor ist gross, der zu einer Zusammensetzungsänderung führt, wenn ein Leck auftritt, und diese Zusammensetzungsänderung hat einen ungünstigen Einfluss auf die Systemleistung.

R410A ist eine binäre Mischung aus HFC-32 und HFC-125. Sein Temperaturbereichsfaktor ist klein und gehört zur fast azeotropen Mischung. R410A kann nicht direkt nachträglich geändert werden, weil sein Betriebsdruck und seine Volumenkapazität höher als die des HCFC-22 sind. Deshalb müssen der Kompressor und weitere Hauptbauglieder eines Kühlsystems umentwickelt werden, wenn R410A verwendet werden soll.

Vom Standpunkt des Umweltschutzes aus haben R407C und R410A einen hohen GWP, obwohl sie einen ODP-Wert von Null aufweisen. Um die Freisetzung von Treibhausgasen steuern zu können, werden bei der vorliegenden Erfindung HFC-Kältemittel ausgewählt, und es wird ein neues, alternatives Kältemittel als Ersatz für HCFC-22 vorgeschlagen.

Eine Aufgabe der vorliegenden Erfindung besteht darin, ein umweltfreundliches Arbeitsfluid zu schaffen, das als Ersatz für das HCFC-22 dienen kann.

Gemäß der vorliegenden Erfindung wird ein Arbeitsfluid vorgeschlagen, das 5-60 Massen-% Fluorethan (HFC-161), 25-50 Massen-% Pentafluorethan (HFC-125) und 5-50 Massen-% Difluormethan (HFC-32) aufweist.

Die vorliegende Erfindung hat die folgenden Vorteile:

1. Das Arbeitsfluid ist fast azeotrop; sein Temperaturbereich ist kleiner als der des R407C;
2. das Arbeitsfluid ist umweltfreundlich; sein ODP ist Null; sein GWP ist kleiner als das des HCFC-22 und der alternativen Hauptkältemittel R407C und R410A;
3. die thermodynamischen Eigenschaften, beispielsweise das Druckverhältnis und der Betriebsdruck, sind denen des HCFC-22 ähnlich; ohne Änderung der Hauptbauglieder des Systems sind seine thermodynamischen Parameter, beispielsweise die Kühlkapazität je Masseneinheit und die Ablauftemperatur, besser als die des HCFC-22. Obwohl sein COP kleiner als das des HCFC-22 ist, ist es größer als das des R410A und R407C; daher kann diese Erfindung eine Potentialalternative zum HCFC-22 sein, und es kann eine geringere Lademasse verwendet werden.

Eine Aufgabe dieser Erfindung besteht darin, ein neues, alternatives Kältemittel als Ersatz für das HCFC-22 zu schaffen, das ein Null-Ozonverarmungspotential und ein kleines Globalerwärmungspotential aufweist. Ferner soll das zu schaffende Fluid ähnliche thermodynamische Eigenschaften wie die des HCFC-22 aufweisen und als Eintropfersatz für das HCFC-22 dienen können.

Dieses neue Kältemittel ist gemäß der Erfindung dadurch gekennzeichnet, dass es 5-60 Massen-% Fluorethan (HFC-161), 25-50 Massen-% Pentafluorethan (HFC-125) und 5-50 Massen-% Difluormethan (HFC-32) aufweist.

Die bevorzugten Zusammensetzungen sind 30-60 Massen-% Fluorethan (HFC-161), 25-50 Massen-% Pentafluorethan (HFC-125) und 5-35 Massen-% Difluormethan (HFC-32).

Noch bessere Zusammensetzungen sind 40-50 Massen-% Fluorethan (HFC-161), 30-45 Massen-% Pentafluorethan (HFC-125) und 10-25 Massen-% Difluormethan (HFC-32).

Die weitaus besten Zusammensetzungen sind 43-47 Massen-% Fluorethan (HFC-161), 36-40 Massen-% Pentafluorethan (HFC-125) und 16-20 Massen-% Difluormethan (HFC-32).

Das Präparierungsverfahren dieses neuen Fluids besteht im Mischen jeder Flüssigkeitskomponente im Massenverhältnis.

Bei den oben genannten Komponenten ist die Molekularformel von Fluorethan (HFC-161) $CH_3CH_2F$. Sein Molekulargewicht beträgt 48,06. Sein normaler Siedepunkt beträgt -37,1° C. Seine kritische Temperatur beträgt 102,2° C, und sein kritischer Druck beträgt 4,7 MPa.

Bei den oben genannten Komponenten ist die Molekularformel von Pentafluorethan (HFC-125) $CHF_2CF_3$. Sein Molekulargewicht beträgt 120,02. Sein normaler Siedepunkt liegt bei -48,1° C. Seine kritische Temperatur beträgt 66,2° C, und sein kritischer Druck beträgt 3,63 MPa.

Bei den oben genannten Komponenten ist die Molekularformel von Difluormethan (HFC-32) $CH_2F_2$. Sein Molekulargewicht beträgt 52,02. Sein normaler Siedepunkt liegt bei -51,7° C. Seine kritische Temperatur beträgt 78,2° C, und sein kritischer Druck beträgt 5,78 MPa.

Die vorliegende Erfindung wird nun anhand von Ausführungsbeispielen näher erläutert. In den Beispielen wird gemischt:

Beispiel 1: HFC-161, HFC-125 und HFC-32 im Massenverhältnis von 5:50:45 während der flüssigen Phase;
Beispiel 2: HFC-161, HFC-125 und HFC-32 im Massenverhältnis von 5:45:50 während der flüssigen Phase;
Beispiel 3: HFC-161, HFC-125 und HFC-32 im Massenverhältnis von 25:25:50 während der flüssigen Phase;
Beispiel 4: HFC-161, HFC-125 und HFC-32 im Massenverhältnis von 20:40:40 während der flüssigen Phase;
Beispiel 5: HFC-161, HFC-125 und HFC-32 im Massenverhältnis von 15:35:50 während der flüssigen Phase;
Beispiel 6: HFC-161, HFC-125 und HFC-32 im Massenverhältnis von 50:40:10 während der flüssigen Phase;
Beispiel 7: HFC-161, HFC-125 und HFC-32 im Massenverhältnis von 30:35:35 während der flüssigen Phase;
Beispiel 8: HFC-161, HFC-125 und HFC-32 im Massenverhältnis von 60:35:5 während der flüssigen Phase;
Beispiel 9: HFC-161, HFC-125 und HFC-32 im Massenverhältnis von 40:25:35 während der flüssigen Phase;
Beispiel 10: HFC-161, HFC-125 und HFC-32 im Massenverhältnis von 45:50:5 während der flüssigen Phase;
Beispiel 11: HFC-161, HFC-125 und HFC-32 im Massenverhältnis von 15:50:35 während der flüssigen Phase;
Beispiel 12: HFC-161, HFC-125 und HFC-32 im Massenverhältnis von 30:50:20 während der flüssigen Phase;
Beispiel 13: HFC-161, HFC-125 und HFC-32 im Massenverhältnis von 60:25:15 während der flüssigen Phase;
Beispiel 14: HFC-161, HFC-125 und HFC-32 im Massenverhältnis von 45:37:18 während der flüssigen Phase.

Die Kennwerte jedes Beispiels werden in den folgenden Tabellen mit denen des HCFC-22 und dessen Hauptersatzkältemitteln R407C und R410A verglichen, um die Merkmale und Wirkungen dieser Erfindung darzulegen.

a) Nahezu azeotrop

Tabelle 1

Vergleich des Temperaturbereichs in °C

| Beispiel | Siedepunkt | Taupunkt | Temperaturbereichsfaktor | Beispiel | Siedepunkt | Taupunkt | Temperaturbereichsfaktor |
|---|---|---|---|---|---|---|---|
| 1 | -51.52 | -51.33 | 0.19 | 8 | -42.93 | -39.87 | 3.06 |
| 2 | -51.66 | -51.53 | 0.13 | 9 | -50.23 | -46.41 | 3.82 |
| 3 | -51.48 | -50.15 | 1.33 | 10 | -44.13 | -41.16 | 2.97 |
| 4 | -51.09 | -49.69 | 1.4 | 11 | -50.92 | -49.77 | 1.15 |
| 5 | -51.62 | -51.08 | 0.54 | 12 | -48.92 | -45.52 | 3.40 |
| 6 | -45.59 | -41.52 | 4.07 | 13 | -46.44 | -41.41 | 5.03 |
| 7 | -50.51 | -47.73 | 2.78 | 14 | -47.86 | -43.32 | 4.54 |
| R407C | -43.81 | -36.72 | 7.09 | | | | |

(Bemerkung: die Siedepunkt- und der Taupunkttemperaturen in Tabelle 1 sind Sättigungstemperaturen, die sich auf die Standardatmosphäre von 101,325 kPa beziehen.)

Wie in Tabelle 1 gezeigt ist, ist der Temperaturbereichsfaktor jeder Beispielsmischung kleiner als der des R407C und gehört zu einem fast azeotropen Kältemittel.

b) Umwelteigenschaften

Die Umwelteigenschaften jeder Beispielsmischung und des HCFC-22, R407C und, R410A sind in der folgenden Tabelle 2 dargestellt. Das ODP des CFC-11 wird als Wert 1,0 gesetzt. Das GWP von $CO_2$ wird als Wert 1,0 gesetzt (100 Jahre).

Tabelle 2

Vergleich der Umwelteigenschaften

| Beispiel | ODP | GWP | Beispiel | ODP | GWP |
|---|---|---|---|---|---|
| 1 | 0 | 1325 | 8 | 0 | 612 |
| 2 | 0 | 1221 | 9 | 0 | 622 |
| 3 | 0 | 728 | 10 | 0 | 965 |
| 4 | 0 | 999 | 11 | 0 | 1232 |
| 5 | 0 | 955 | 12 | 0 | 1096 |
| 6 | 0 | 759 | 13 | 0 | 485 |
| 7 | 0 | 842 | 14 | 0 | 752 |
| HCFC-22 | 0.055 | 1700 | R407C | 0 | 1370 |
| R410A | 0 | 1370 | | | |

Die Daten in der Tabelle 2 zeigen, dass jede Beispielsmischung einen ODP-Wert von Null ohne Verarmungspotential für die Ozonschicht aufweist, so dass dieser ODP-Wert besser als der des HCFC-22 ist.
Ferner ist der GWP-Wert jeder Beispielsmischung kleiner als die des HCFC-22, R407C und R410A, wobei dieser GWP-Wert 29-78 % von dem des HCFC-22 und 35-97 % von denen des R407C und R410A ist.

c) Thermodynamische Parameter und Eigenschaften

Die thermodynamischen Parameter (Verdampfungsdruck $P_0$, Kondensierungsdruck $P_k$, Druckverhältnis $P_k/P_0$, Ablauftemperatur $t_2$) und auch die relativen, thermodynamischen Eigenschaften (relatives COP, relative Kühlkapazität $q_0$ je Masseneinheit, relative Volumenkühlkapazität $q_v$, Kompressorleistungsverbrauch $w_v$ je Volumeneinheit) jeder Beispielsmischung werden mit denen des HCFC-22, R407C und R410A in der folgenden Tabelle 3 bei einer Verdunstungstemperatur von 7° C, einer Kondensierungstemperatur von 55° C, einer Saugtemperatur von 18° C und einer Unterkühlungstemperatur von 50° C verglichen. Die relativen, thermodynamischen Eigenschaften beziehen sich hier auf den Zyklusleistungsvergleich des alternativen Kältemittels (jede Beispielsmischung, R407C und R410A) mit denen des HCFC-22.

Tabelle 3

Vergleich der thermodynamischen Eigenschaften

| Beispiel | $P_0$ (MPa) | $P_k$ (MPa) | $\dfrac{p_k}{p_0}$ | $t_2$ (°C) | Relatives COP | Relatives $q_0$ | Relatives $q_v$ | Relatives $w_v$ |
|---|---|---|---|---|---|---|---|---|
| 1 | 0.974 | 3.355 | 3.45 | 93.46 | 0.91 | 0.99 | 1.37 | 1.51 |
| 2 | 0.980 | 3.387 | 3.46 | 95.58 | 0.91 | 1.04 | 1.39 | 1.54 |
| 3 | 0.930 | 3.202 | 3.44 | 98.20 | 0.93 | 1.26 | 1.36 | 1.46 |
| 4 | 0.914 | 3.154 | 3.45 | 93.97 | 0.92 | 1.11 | 1.31 | 1.43 |
| 5 | 0.958 | 3.300 | 3.45 | 96.87 | 0.92 | 1.15 | 1.38 | 1.50 |
| 6 | 0.670 | 2.381 | 3.55 | 88.49 | 0.97 | 1.27 | 1.02 | 1.06 |
| 7 | 0.862 | 2.992 | 3.47 | 94.16 | 0.93 | 1.20 | 1.26 | 1.35 |
| 8 | 0.617 | 2.203 | 3.57 | 87.80 | 0.98 | 1.36 | 0.97 | 0.98 |
| 9 | 0.828 | 2.888 | 3.49 | 95.91 | 0.94 | 1.33 | 1.24 | 1.31 |
| 10 | 0.650 | 2.311 | 3.56 | 85.31 | 0.96 | 1.16 | 0.99 | 1.02 |

(fortgesetzt)

Vergleich der thermodynamischen Eigenschaften

| Beispiel | $P_0$ (MPa) | $P_k$ (MPa) | $\dfrac{p_k}{p_0}$ | $t_2$ (°C) | Relatives COP | Relatives $q_0$ | Relatives $q_v$ | Relatives $w_v$ |
|---|---|---|---|---|---|---|---|---|
| 11 | 0.914 | 3.156 | 3.45 | 91.20 | 0.91 | 1.01 | 1.29 | 1.41 |
| 12 | 0.790 | 2.766 | 3.50 | 88.80 | 0.93 | 1.08 | 1.15 | 1.23 |
| 13 | 0.675 | 2.402 | 3.56 | 92.10 | 0.97 | 1.44 | 1.05 | 1.08 |
| 14 | 0.730 | 2.579 | 3.53 | 90.90 | 0.96 | 1.26 | 1.10 | 1.15 |
| HCFC-22 | 0.622 | 2.176 | 3.50 | 97.97 | 1.00 | 1.00 | 1.00 | 1.00 |
| R407C | 0.641 | 2.346 | 3.66 | 88.06 | 0.94 | 0.95 | 0.97 | 1.03 |
| R410A | 0.990 | 3.425 | 3.46 | 93.05 | 0.90 | 0.98 | 1.40 | 1.55 |

Die in der Tabelle 3 dargestellten Ergebnisse zeigen, dass unter den obigen Arbeitsbedingungen die Kondensierungsdrucke, die Verdunstungsdrucke und die Druckverhältnisse der Beispielsmischungen 6, 8, 10, 13 sich im sicheren Betriebsbereich und in der Nähe von denen des HCFC-22 befinden. Diese Beispielsmischungen können daher als Eintropfersatz verwendet werden. Die Ablauftemperaturen der Beispielsmischungen 6, 8, 10, 13 sind alle kleiner als die des HCFC-22 und befinden sich in der Nähe von denen des R407C und R410A oder sind sogar kleiner als diese. Die Kühlkapazitäten je Masseneinheit der Beispielsmischungen 6, 8, 10, 13 sind größer als die des HCFC-22, R407C und R410A, und deshalb wird beim Ersatz eine geringere Lademasse benötigt. Ihre COP ist größer als die der R407C und R410A, so dass eine Energieeinsparungswirkung eintritt. Ferner sind ihre Volumenkühlkapazitäten und die Kompressorleistungsverbräuche je Volumeneinheit zu denen des HCFC-22 und R407C fast gleich, so dass die Kompressoren des HCFC-22 und R407C direkt verwendet werden können und nur wenige Änderungen beim Ersatz nötig sind.

Obwohl die Volumenkühlkapazitäten und die Kompressorleistungsverbräuche je Volumeneinheit der Beispielsmischungen 1, 2, 3, 4, 5, 7, 9, 11, 12 und 14 größer als die des HCFC-22 und R407C sind, sind sie kleiner als die des R410A. Die Kompressoren des R410A können mit wenigen Änderungen beim Ersatz direkt verwendet werden.

## Patentansprüche

1. Umweltfreundliches Arbeitsfluid zur Verwendung in Kühl- und Luftklimasystemen,
   **dadurch gekennzeichnet,**
   **dass** es 5-60 Massen-% Fluorethan (HFC-161), 25-50 Massen-% Pentafluorethan (HFC-125) und 5-50 Massen-% Difluormethan (HFC-32) aufweist.

2. Umweltfreundliches Arbeitsfluid nach Anspruch 1,
   **dadurch gekennzeichnet,**
   **dass** es 30-60 Massen-% Fluorethan (HFC-161), 25-50 Massen-% Pentafluorethan (HFC-125) und 5-35 Massen-% Difluormethan (HFC-32) aufweist.

3. Umweltfreundliches Arbeitsfluid nach Anspruch 1,
   **dadurch gekennzeichnet,**
   **dass** es 40-50 Massen-% Fluorethan (HFC-161), 30-45 Massen-% Pentafluorethan (HFC-125) und 10-25 Massen-% Difluormethan (HFC-32) aufweist.

4. Umweltfreundliches Arbeitsfluid nach Anspruch 1,
   **dadurch gekennzeichnet,**
   **dass** es 43-47 Massen-% Fluorethan (HFC-161), 36-40 Massen-% Pentafluorethan (HFC-125) und 16-20 Massen-% Difluormethan (HFC-32) aufweist.

## Claims

1. An environmentally friendly working fluid for use in refrigeration and air-conditioning systems,
   **characterised in that**

it has 5-60% by mass fluoroethane (HFC-161), 25-50% by mass pentafluoroethane (HFC-125) and 5-50% by mass difluoromethane (HFC-32).

2. An environmentally friendly working fluid according to claim 1,
**characterised in that**
it has 30-60% by mass fluoroethane (HFC-161), 25-50% by mass pentafluoroethane (HFC-125) and 5-35% by mass difluoromethane (HFC-32).

3. An environmentally friendly working fluid according to claim 1,
**characterised in that**
it has 40-50% by mass fluoroethane (HFC-161), 30-45% by mass pentafluoroethane (HFC-125) and 10-25% by mass difluoromethane (HFC-32).

4. An environmentally friendly working fluid according to claim 1,
**characterised in that**
it has 43-47% by mass fluoroethane (HFC-161), 36-40% by mass pentafluoroethane (HFC-125) and 16-20% by mass difluoromethane (HFC-32).


**Revendications**

1. Fluide de travail écologique pour l'utilisation dans des systèmes de refroidissement et de climatisation de l'air,
**caractérisé en ce**
qu'il présente 5 à 60 % en masse de fluoroéthane (HFC-161), 25 à 50 % en masse de pentafluoroéthane (HFC-125) et 5 à 50 % en masse de difluorométhane (HFC-32).

2. Fluide de travail écologique selon la revendication 1,
**caractérisé en ce**
qu'il présente 30 à 60 % en masse de fluoroéthane (HFC-161), 25 à 50 % en masse de pentafluoroéthane (HFC-125) et 5 à 35 % en masse de difluorométhane (HFC-32).

3. Fluide de travail écologique selon la revendication 1,
**caractérisé en ce**
qu'il présente 40 à 50 % en masse de fluoroéthane (HFC-161), 30 à 45 % en masse de pentafluoroéthane (HFC-125) et 10 à 25 % en masse de difluorométhane (HFC-32).

4. Fluide de travail écologique selon la revendication 1,
**caractérisé en ce**
qu'il présente 43 à 47 % en masse de fluoroéthane (HFC-161), 36 à 40 % en masse de pentafluoroéthane (HFC-125) et 16 à 20 % en masse de difluorométhane (HFC-32).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9211338 A
- US 5277834 A
- EP 0626435 A
- US 5722256 A